# EUROPÄISCHE PATENTSCHRIFT

(11) **EP 0 382 041 B1**
(45) Veröffentlichungstag und Bekanntmachung des Hinweises auf die Patenterteilung: **11.08.1993**
(21) Anmeldenummer: 90101737.6
(22) Anmeldetag: 29.01.1990
(51) Int. Cl.: F16K 11/02

(54) **Mischventil für Sanitärarmaturen**
Mixing valve for sanitary fittings
Soupape de mélange pour armatures sanitaires

(30) Priorität: 10.02.1989 DE 3903998
(43) Veröffentlichungstag der Anmeldung: 16.08.1990
(73) Patentinhaber: FRIEDRICH GROHE AKTIENGESELLSCHAFT, D-58675 Hemer (DE)
(72) Erfinder: Pawelzik, Manfred, D-4770 Soest (DE); Titze, Horst, D-5800 Hagen (DE)

(56) Entgegenhaltungen:
- DE-A- 3 419 208
- DE-A- 3 500 966
- US-A- 3 938 553

## Beschreibung

Die Erfindung betrifft ein Mischventil für Sanitärarmaturen mit den im Oberbegriff des Anspruchs 1 angegebenen Merkmalen.
Ein Mischventil dieser Gattung ist aus der Druckschrift DE-A-32 44 121 bekannt. Bei diesem Mischventil ist der Bodenteil des Gehäuses in eine Mantelhülse einschiebbar ausgebildet, wobei die erforderlichen Dichtungen im Bodenteil in Aufnahmenuten angeordnet sind.
Da derartige Mischventile für den Einsatz in Sanitärarmaturen vorgesehen sind, kann nicht ausgeschlossen werden, daß bei der Einmontage der Bodenteil aus der Mantelhülse insgesamt oder auch Dichtungen vom Bodenteil unbeabsichtigt herausfallen. Ferner ist auch die Gefahr gegeben, daß bei der Ersatzteilhaltung, bei der Lagerung oder beim Transport die Ventilkartuschen unbeabsichtigt auseinanderfallen, was äußerst unerwünscht ist.

Aus der Druckschrift US-A-3,938,553 ist ferner ein anderes Ventil bekannt, bei dem Dichtungen durch Hinterschnitte in den Nuten gehalten sind. Derartige Hinterschneidungen sind jedoch relativ aufwendig in der Herstellung und können auch Schwierigkeiten bei der Montage der Dichtungen verursachen.
Schließlich ist aus der Druckschrift DE-A-35 00 966 ein Mischhahn bekannt geworden, bei dem Gehäuseteile mittels Laschen verrastet sind.

Der Erfindung liegt die Aufgabe zugrunde, das im Oberbegriff des Anspruchs 1 angegebene Mischventil mit einfachen, kostengünstigen Mitteln zu verbessern, derart, daß ein unbeabsichtigtes Herausfallen von Einzelteilen aus dem Mischventil weitgehend ausgeschlossen ist.

Diese Aufgabe wird erfindungsgemäß durch die im kennzeichnenden Teil des Anspruchs 1 angegebenen Merkmale gelöst.
Weitere Ausgestaltungen der Erfindung sind in den Ansprüchen 2 und 3 angegeben.

Mit den erfindungsgemäßen Merkmalen wird erreicht, daß das Mischventil als eine gekapselte Einheit wesentlich einfacher zu handhaben ist, z.B. bei der Einmontage in Sanitärarmaturen oder als Ersatzteil. Ein Herausfallen von Einzelteilen, insbesondere auch der inneren Ventilglieder aus der Baueinheit, wird wirksam verhindert. Für einen Ausgleich von Fertigungstoleranzen der Einzelteile ist die Halterung des Bodenteils so ausgebildet, daß eine begrenzte axiale Verschiebung in der Mantelhülse ermöglicht wird.

Ein Ausführungsbeispiel der Erfindung ist in der Zeichnung dargestellt und wird im folgenden näher erläutert. Es zeigt
- Figur 1: eine Mischventilkartusche im Längsschnitt;
- Figur 2: einen Ausschnitt aus dem Bodenteil gemäß Figur 1 in vergrößerter Darstellung mit einer Dichtung im Schnitt;
- Figur 3: einen Bodenteil gemäß Figur 1 in Druntersicht;
- Figur 4: den Bodenteil gemäß Figur 3 in der Schnittebene IV;
- Figur 5: den Bodenteil gemäß Figur 3 in der Schnittebene V.

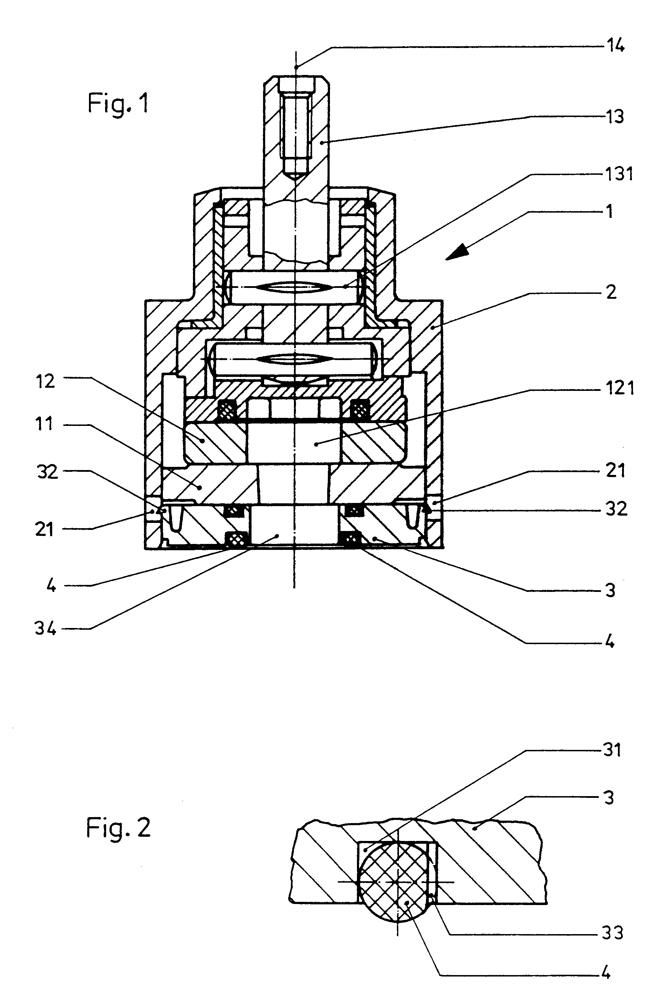

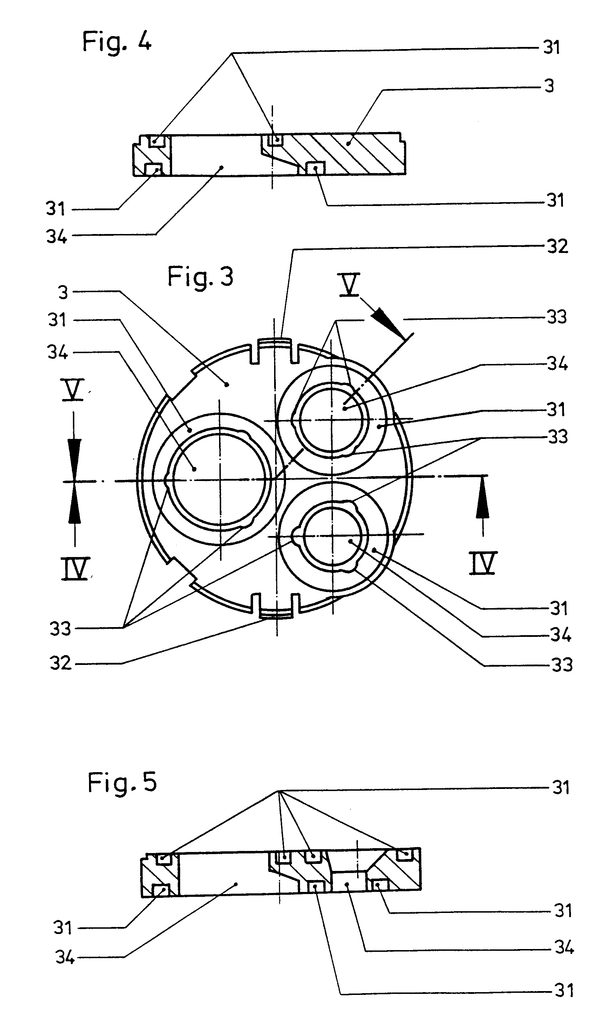

Das Mischventil 1 ist in einem Gehäuse, bestehend aus einer etwa zylindrischen Mantelhülse 2 und einem Bodenteil 3 als Baueinheit, gekapselt ausgebildet und ist für den Einsatz in Sanitärarmaturen vorgesehen. Als Ventilglied ist im Inneren der Mantelhülse 2 eine ortsfest gehalterte Ventilsitzscheibe 11 an dem Bodenteil 3 angelagert, wobei separate Durchtrittsöffnungen für das zufließende kalte und warme Wasser sowie für das rückfließende Mischwasser ausgebildet sind. An der zum Bodenteil 3 abgekehrten Seite der Ventilsitzscheibe ist eine Steuerscheibe 12 in zwei Freiheitsgraden verschiebbar angelagert. In der Steuerscheibe 12 ist dabei ein Überströmkanal 121 ausgebildet, mit dem die Durchtrittsöffnungen für das kalte und warme Wasser wahlweise mit der Durchtrittsöffnung für das Mischwasser in Verbindung bringbar ist. Die Stellbewegung für die Steuerscheibe 12 wird dabei von einem Stellhebel 13 eingebracht. Durch ein Verschwenken des Stellhebels 13 um eine Achse 131 kann somit die Gesamtdurchflußmenge und durch ein Drehen um die Mittelachse 14 das Mischungsverhältnis von Kalt- und Warmwasser bzw. die Temperatur des Mischwassers eingestellt werden. Zur Abdichtung und Abgrenzung der Durchtrittsöffnungen 34 sind an beiden Stirnseiten des Bodenteils 3 Aufnahmenuten 31 zur Halterung von Dichtungen 4 ausgebildet.
Zur Verhinderung eines unbeabsichtigten Herausfallens der Dichtungen sind in den Aufnahmenuten 31, wie es insbesondere aus Figur 2 der Zeichnung zu entnehmen ist, Stege 33 in einer Seitenwand ausgebildet. Als Dichtung 4 ist hierbei ein O-Ring vorgesehen, wobei der Steg 33 so bemessen ist, daß der O-Ring punktuell etwa um 10% der Schnurstärke zusammengepreßt wird. Hierdurch wird eine hinreichende Reibhaftung der Dichtung 4 in der Aufnahmenut erzielt, so daß weitgehend ein unbeabsichtigtes Herausfallen des Rundschnurrings ausgeschlossen werden kann. Wie aus Figur 3 der Zeichnung zu entnehmen ist, sind die Stege 33 symmetrisch an drei Stellen der Innenwand der Aufnahmenut 31 ausgebildet.

Der Bodenteil 3 weist an seiner äußeren Mantelfläche an zwei gegenüberliegenden Seiten federnde Nasen 32 auf. Bei der Montage des Mischventils 1 können somit zunächst die Einzelteile, Stellhebel 3 mit Steuerscheibe 12 und Ventilsitzscheibe 11, in die Mantelhülse eingeschoben werden. Danach kann der Bodenteil 3, nachdem die Dichtungen 4 in die Aufnahmenuten 31 eingedrückt sind, in das offene Ende der Mantelhülse 2 eingeschoben werden. Beim Einschiebvorgang werden dabei die federnden Nasen 32 zur Mittelachse 14 ausgelenkt und gleiten an der Innenwand der Mantelhülse 2 entlang. Im Bereich der Stecklage des Bodenteils 3 sind in der Mantelhülse 2, entsprechend den Nasen 32, Ausnehmungen 21 ausgebildet, in die nunmehr die Nasen 32 zurückschnappen und verhindern, daß der Bodenteil 3 aus der Mantelhülse 2 herausgleiten kann. Zum Ausgleich von Fertigungstoleranzen bei den Ventileinzelteilen sind die Ausnehmungen 21 in der Mantelhülse 2 so ausgelegt, daß eine begrenzte axiale Verschiebung möglich ist.
Da die Mantelhülse 2 und der Bodenteil 3 vorzugsweise im Spritzgießverfahren aus Kunststoff hergestellt wird, können sowohl die Stege 33 in den Aufnahmenuten 31 als auch die federnden Nasen 32 äußerst kostengünstig hergestellt werden. Bei einem Versuch hat sich als zweckmäßig erwiesen, wenn der Steg 33 etwa 0,2 mm in eine Aufnahmenut 31 mit einer Breite von 2 mm hineinragt. Hierbei ragt der Steg 33 vorteilhaft mit einer zylindrischen Mantelfläche, deren Radius etwa 1,5 mm beträgt, in die Aufnahmenut 31 hinein.

## Patentansprüche

1. Mischventil (1) für den Einsatz in Sanitärarmaturen, wobei die Ventileinzelteile zur Steuerung des Mischungsverhältnisses und der Gesamtdurchflußmenge in einem Gehäuse gekapselt angeordnet sind, das Gehäuse aus einer Mantelhülse (2) und einem in die Mantelhülse (2) einschiebbaren Bodenteil (3) gebildet ist und im Bodenteil (3) an den Stirnflächen Dichtungen (4) in Aufnahmenuten (31) zum dichten Anschluß der Ventileinzelteile mit den Zu- und Ablaufkanälen der Sanitärarmatur vorgesehen sind, dadurch gekennzeichnet, daß die Dichtungen (4) in den Aufnahmenuten (31) in Teilbereichen durch Reibschluß verrastet sind, wobei zwei oder mehrere Verengungen an den Seitenflächen der Aufnahmenuten (31) vorgesehen sind, und der Bodenteil (3) im Bereich der Wandung zwei oder mehrere symmetrisch zueinander angeordnete Nasen (32) aufweist, die in Ausnehmungen (21) in der Mantelhülse (2) in Stecklage einrasten, wobei die Ausnehmungen (21) so bemessen sind, daß eine begrenzte axiale Verschiebung ermöglicht ist.

2. Mischventil nach Anspruch 1, dadurch gekennzeichnet, daß die Dichtung (4) jeweils in dem verengten Bereich etwa um 10% zusammengepreßt wird.

3. Mischventil nach Anspruch 2, dadurch gekennzeichnet, daß die Verengung jeweils von einem Steg (33) gebildet ist, der mit einer Zylindermantelfläche aus einer Seitenwand der Aufnahmenut (31) vorkragt.

## Claims

1. Mixing valve for use in plumbing fittings, wherein the individual valve parts for controlling the mixing ratio and the total amount of water flowing through are encapsulated in a housing, the housing is formed from an outer sleeve (2) and a base part (3) insertable in the outer sleeve (2), and in the base part (3) at the end faces there are provided seals (4) in receiving grooves (31) for the sealed connection of the individual valve parts to the supply and discharge channels of the plumbing fitting, characterized in that the seals (4) are held in the receiving grooves (31) in partial regions by frictional engagement, two or more constrictions being formed at the lateral faces of the receiving grooves (31), and the base part (3) has in the outside region two or more projections (32) arranged symmetrically with one another which lock into apertures (21) in the outer sleeve (2) in the connected state, the apertures (21) being dimensioned so that a limited axial displacement is possible.

2. A mixing valve according to claim 1, characterized in that the seal (4) is compressed in each constricted region by about 10%.

3. A mixing valve according to claim 2, characterized in that each constriction is formed by a bulge (33) which projects with a cylindrical outer surface from a lateral wall of the receiving groove (31).

## Revendications

1. Mitigeur (1) destiné à équiper un robinet d'eau sanitaire, les différentes parties constituant le mitigeur et servant à régler le rapport de mélange et le débit total étant encapsulées dans un boîtier formé d'une enveloppe (2) et d'un fond (3) qui se glisse dans l'enveloppe (2), les surfaces frontales du fond (3) comportant des joints (4) logés dans des rainures (31) pour assurer la séparation étanche des parties de mitigeur par rapport aux canaux d'alimentation et d'évacuation du robinet, mitigeur caractérisé en ce que les joints (4) sont accrochés dans les rainures (31), dans des zones partielles, par une liaison par frottement, et deux ou plusieurs rétrécissements sont prévus sur les faces latérales des rainures de réception (31) et la partie de fond (3) comporte, au niveau de la paroi, deux ou plusieurs becs (32), symétriques, qui s'accrochent dans des cavités (21) de l'enveloppe (2) en position engagée, les cavités (21) étant dimensionnées pour permettre un coulissement axial limité.

2. Mitigeur selon la revendication 1, caractérisé en ce que le joint (4) est comprimé d'environ 10 % dans la zone rétrécie.

3. Mitigeur selon la revendication 2, caractérisé en ce que le rétrécissement est constitué chaque fois par un bossage (33) qui vient en saillie par une surface d'enveloppe cylindrique par rapport à la paroi latérale de la rainure de réception (31).
